# EUROPÄISCHE PATENTANMELDUNG

(11) **EP 2 484 610 A2**
(43) Veröffentlichungstag der Anmeldung: **08.08.2012**
(21) Anmeldenummer: 12000774.5
(22) Anmeldetag: 07.02.2012
(51) Int. Cl.: B65G 35/06, B23P 21/00

(54) **Staufördersystem mit Transportwagen**

(30) Priorität: 07.02.2011 DE 202011002465 U
(71) Anmelder: KNOLL MASCHINENBAU GMBH, 88348 Bad Saulgau (DE)
(72) Erfinder: Rudelsch, Michael, 72290 Loßburg-Wittendorf (DE)
(74) Vertreter: Otten, Roth, Dobler & Partner

(57) **Zusammenfassung**

Gemäß der Erfindung ist ein Staufördersystem, insbesondere Montagefördersystem vorgesehen, mit einer zumindest eine erste Fahrbahn aufweisende Stauförderanlage und wenigstens einem Transportwagen (3), insbesondere Werkstückwagen, wobei die Stauförderanlage wenigstens eine Antriebsvorrichtung zum Antreiben des Transportwagens auf der ersten Fahrbahn aufweist, wobei die Antriebsvorrichtung wenigstens ein endlos umlaufendes Mitnehmerelement (14), insbesondere eine Kette, ein Band oder dergleichen, mit mindestens einer Antriebsfläche zum Anordnen an eine Mitnahmefläche des Transportwagens umfasst, das dadurch gekennzeichnet ist, dass der Transportwagen als Flurförderwagen ausgebildet ist, wobei der Flurförderwagen wenigstens zwei, mit einem quer zur Förderrichtung ausgerichteten Abstand voneinander beabstandete Laufräder (10) zum Fahren auf dem als zweite Fahrbahn ausgebildeten Flur umfasst, wobei die Laufräder zumindest eine von der Mitnahmefläche separate Lauffläche umfassen.

## Beschreibung

Die Erfindung betrifft ein Staufördersystem mit Transportwagen nach dem Oberbegriff des Anspruchs 1.

Derartige Staufördersysteme, insbesondere Montagefördersysteme bzw. Fließfertigungsanlagen oder dergleichen, sind beispielsweise aus den Druckschriften EP 752 971, EP 1 484 267, DE 197 29 369 oder DE 101 47 026 bekannt. Zum Teil sind diese bereist modular aufgebaut und umfassen Arbeits- oder Roboter- bzw. Montageplätze zum Montieren bzw. Fertigen von Produkten, Werkstücken, Vorrichtungen etc.. Die Modularität der Anlagen ermöglicht einen flexibel miteinander kombinierbaren und anordenbaren Einsatz unterschiedlichster Funktionseinheiten des Fördersystems.

Aufgabe der Erfindung ist es, ein Staufördersystem, insbesondere Montagefördersystem bzw. Fließfertigungsanlage oder dergleichen, vorzuschlagen, das eine noch höhere Flexibilität für die unterschiedlichsten Bedürfnisse der Produktionswirtschaft aufweist.

Diese Aufgabe wird mit einem Staufördersystem der einleitend genannten Art durch die Merkmale des Anspruchs 1 oder 11 oder 12 gelöst. Durch die in den abhängigen Ansprüchen genannten Merkmale sind vorteilhafte Ausführungen und Weiterbildungen möglich.

Dementsprechend ist gemäß einer Erfindung vorgesehen, dass der Transportwagen als Flurförderwagen ausgebildet ist, wobei der Flurförderwagen wenigstens zwei, mit einem quer zur Förderrichtung ausgerichteten Abstand voneinander beabstandete Laufräder zum Fahren auf dem als zweite Fahrbahn ausgebildeten Flur umfasst, wobei die Laufräder zumindest eine von der Mitnahmefläche separate Lauffläche umfassen.

Mit Hilfe des erfindungsgemäßen Staufördersystems ist es nun möglich, nicht nur einzelne Produkte bzw. Werkstücke oder Transportplattformen oder dergleichen zu längs der (ersten) Fahrbahn der Stauförderanlage zu transportieren, sondern es können Transportwägen mit den Werkstücken etc. verwendet werden, die mit ihren Laufrädern auch auf dem Flur (zweite Fahrbahn), d.h. frei in der Werkshalle und/oder dem Werksgelände bzw. ggf. sogar auf öffentlichen straßen fahren können. Die erfindungsgemäßen Transportwägen können sowohl Selbstfahrer mit eigenem Fahrantrieb für den Flur oder geschoben und/oder gezogen als Anhänger ausgebildet werden.

Durch den Antrieb der Transportwägen innerhalb der Stauförderanlage mittels der vorteilhaften Antriebsvorrichtung gemäß der Erfindung wird eine vorteilhafte Kopplung mehrere Transportwägen erreicht. Beispielsweise können diese getaktet und/oder kontinuierlich verfahren werden. Eine Ausbildung der Stauförderanlage mittels vorteilhafter Schienenvorrichtungen, insbesondere zwei voneinander beabstandete Schienenvorrichtungen mit beispielsweise zwei entsprechend beabstandete endlos umlaufenden Mitnehmerelementen wie Förderketten, Förderbänder oder dergleichen, sind darüber hinaus auch zur vorteilhaften Führung und Stabilisierung der Transportwagen innerhalb der Stauförderanlage bzw. während des Bearbeitungs- bzw. Montagevorgangs am Arbeits- bzw. Montageplatz von großem Vorteil.

Gegebenenfalls können die Mitnehmerelemente als Geradlinige Kette, sog. GL-Kette, ausgebildet werden. Vorzugsweise werden Stau-Rollen-Förderketten als Mitnehmerelemente verwendet. Hierbei liegt der Transportwagen in vorteilhafter Weise auf Rollen der Kette auf. Diese ermöglichen bei Hindernissen und/oder vorteilhafter Stoppervorrichtung ein vorteilhaftes Anhalten von Transportwagen, selbst wenn die Kette weiterläuft. Dies erhöht zum einen die Sicherheit, für den Fall von unbeabsichtigtem Auftreten von Hindernissen wie eine Person und/oder (z.B. umgefallene) Gegenstände etc. gelangen in den Förderbereich der ersten Fahrbahn. Zum anderen wird hierdurch die Steuerung der Mitnehmerelemente bzw. der Antriebsvorrichtung vereinfacht, da diese ggf. kontinuierlich betrieben werden können und die Transportwagen trotzdem z.B. für die Montage am Arbeitsplatz gehalten bzw. gestoppt werden können.

Vorteilhafterweise sind Stopper und/oder Anschlagvorrichtungen vorgesehen, die ein vorteilhaftes definiertes Halten der Transportwagen, z.B. am Arbeits- bzw. Montageplatz und/oder innerhalb eines Pufferabschnittes der Stauförderanlage vor einem Arbeits-/Montageplatz ermöglichen.

Vorzugsweise ist das Staufördersystem gemäß der Erfindung in Modularbauweise bzw. als Modulbausystem ausgebildet. Hierdurch können unterschiedlichste Module des Fördersystems ausgebildet und in vorteilhafter Weise in Abhängigkeit des jeweiligen Anwendungsfalls miteinander kombiniert werden. Zum Beispiel sind Ein- und Ausschleus-Einheiten, zwischen zwei Montageplätzen angeordnete Puffer-/Stau-Einheiten, Dreh-/Schwenkeinheiten z.B. am Montageort für die Montage bzw. Bearbeitung, Umlenkeinheiten, insbesondere für eine Richtungsumkehr längs der Fahrbahn, Hebe- und Senkeinheiten, insbesondere für das überwinden von Hindernissen etc. und/oder für die Einstellung einer vorteilhaften Arbeitshöhe, Weichen und/oder Kreuzungseinheiten u.s.w. vorhanden. Diese können je nach Einsatzort bzw. Produktion variabel miteinander kombiniert oder verändert und/oder gemäß der Erfindung angepasst werden.

Vorzugsweise ist eine Standardisierung bzw. Rasterung der Dimensionen bzw. Abmessungen der Komponenten und/oder der Transporteinheiten vorgesehen. Diese Maßnahme ermöglicht eine besonders flexible Anpassung an unterschiedlichste Anforderungen bzw. Anwendungsfälle und ist zudem wirtschaftlich vor allem bezüglich der Herstellung von großem Vorteil.

In einer besonderen Weiterbildung der Erfindung umfasst die Stauförderanlage wenigstens eine Einschleuseinheit und/oder eine Ausschleuseinheit zum Ein- und/oder Ausschleusen des Flurförderwagens, wobei die Einschleuseinheit und/oder Ausschleuseinheit zumindest eine zur Ebene geneigte Fahrrampe aufweist. Hiermit wird erreicht, dass der/die Flurförderwagen in vorteilhafter Weise in bzw. heraus aus der Stauförderanlage ein- bzw. ausgeschleust werden können. Das heißt die Transportwagen fahren bzw. werden gefahren auf dem Flur, z.B. von einer Lackierstation oder Zusammenstellung der für die Montage benötigten Einzelteile bzw. Konfektionierung oder dergleichen zur Einschleuseinheit und können in die Stauförderanlage mit ihren eigenen Laufrädern hineinrollen/- fahren. Sodann wird der Transportwagen in vorteilhafter Weise von der Antriebsvorrichtung der Stauförderanlage erfasst und entsprechend angetrieben.

Mit dieser Maßnahme kann gerade auch bei vergleichsweise schweren Werkstücken/Teilen bzw. Transportwagen auf einen Einsatz von Hebezeugen wie ein Kran oder ein Hebefahrzeug wie ein Gabelstapler, Hubwagen oder dergleichen verzichtet werden.

Vorzugsweise ist die Neigung der Fahrrampe kleiner als 10°, insbesondere kleiner als 1° oder kleiner als 0,5°. Hiermit können auch besonders schere Teile bzw. Transportwagen selbst von Hand bzw. von einer Person über die Fahrrampe gemäß der Erfindung in die Stauförderanlage eingeschleust werden. Dies vereinfacht und erleichtert die Einschleusung derartiger schwerer Teile bzw. Transportwagen in erheblichem Maß.

In vorteilhaften Varianten der Erfindung weist die Fahrrampe wenigstens zwei, im Abstand der Laufräder voneinander beabstandete Fahrschienen auf und/oder weist die Einschleuseinheit und/oder Ausschleuseinheit und/oder die Fahrschienen am zum Flur ausgerichteten Ende wenigstens eine sich verjüngende Führungseinheit zum Ein-/Ausführen der Laufräder auf. Hiermit kann vor allem das Einführen des/der Transportwagen verbessert werden, gerade auch bei einem manuellen Einführen per Hand.

Denkbar ist eine Anordnung der Laufräder des Transportwagens zwischen bzw. innerhalb der beiden ersten Fahrbahnen des Transportsystems. Hierbei sollten entsprechende Freiräume für das kollisionslose Transportieren der Laufräder vorgesehen werden. Vorzugsweise sind die Laufräder des Transportwagens außerhalb bzw. außen seitlich neben der Stauförderanlage und/oder der ersten Fahrbahn der Stauförderanlage angeordnet. Dies verbessert die Beförderung des/der Wagen im Staufördersystem, da die Laufräder über die Transport-/Antriebskomponenten des Systems in vorteilhafter Weise hinausragen und somit nicht mit entsprechenden Elementen oder Komponenten des Fördersystems kollidieren können.

Vorteilhafterweise sind (möglichst alle) Antriebs und/oder Steuerkomponenten, z.B. Antriebsmotoren, Stopper, Sensorik, Dreh- und/oder Hebevorrichtungen, innerhalb der Laufräder bzw. zwischen den beiden Spuren der Transportwagen. So ist gemäß vorteilhafter Varianten der Erfindung das oder die endlos umlaufenden Mitnehmerelemente der Stauförderanlage zwischen den Laufrädern des Transportwagens und/oder wenigstens ein Antriebsmotor der Antriebsvorrichtung zwischen den Laufrädern des Transportwagens angeordnet.

Zur Lösung der eingangs genannten Aufgabe weist gemäß der Erfindung die Stauförderanlage wenigstens eine Transportschiene, vorzugsweise zwei voneinander beabstandete und im Wesentlichen parallel zueinander angeordnete Transportschienen zum Tragen und Führen des Transportwagens auf, wobei die Transportschiene bzw. Transportschienen im Wesentlichen aus gebogenen und miteinander verbundenen Blechelementen aufgebaut ist. Hiermit kann ein wirtschaftlich besonders günstiges und/oder flexibel an unterschiedlichste Anforderungen bzw. Anwendungen anpassbares Staufördersystem hergestellt und betrieben werden, insbesondere in Modulbauweise und/oder standardisierbar.

Vorzugsweise sind die Blechelemente mit Auflageelementen, wie Stifte und/oder Träger oder dergleichen, in Kontakt bzw. in Wirkverbindung. Die aufzunehmenden Lasten können hierbei in vorteilhafter Weise über einen vorteilhaften Formschluss auf das Schienensystem verteilt und weitergeleitet werden. Hiermit kann eine besonders hohe Traglast bei geringem Eigengewicht der Transportschienen realisierbar werden.

Eine vorteilhafte Erfindung ist zur Lösung der eingangs genannten Aufgabe derart ausgebildet, dass eine wenigstens ein Spannelement aufweisende Spanneinheit zum Spannen des Mitnehmerelementes in eine Spannrichtung vorgesehen ist, wobei die Spanneinheit wenigstens eine Anschlagvorrichtung zum Sperren des Verstellens und/oder Anschlagen des Spannelementes entgegen der Spannrichtung aufweist. Hiermit ist es nun möglich, auch ein Reversieren bzw. Umkehren der Transportrichtung des Mitnehmerelementes vorzusehen. Das heißt, der/die Transportwagen können in vorteilhafter Weise in zwei entgegen gesetzte Transportrichtungen angetrieben bzw. befördert werden. Somit wird die Flexibilität und die Alltagstauglichkeit des Fördersystems erhöht, da die Halteposition des Transportwagens gegebenenfalls für den jeweiligen Arbeitsplatz individuell je nach Bedürfnis der entsprechenden Person nachjustiert bzw. angepasst werden kann. Auch kann z.B. während der Montage verschiedener Bauteile an einem auf dem Transportwagen zu montierendem Produkt, wie ein Gestell, eine Maschine oder dergleichen, jedes zu montierendes Bauteil bzw. jeder Arbeitsschritt unter Umständen bei unterschiedlichen Positionen des Transportwagens (weiter vorne oder weiter hinten) auf dem Mitnehmerelement bzw. der Transportschiene in optimaler Position montiert werden.

Es hat sich nämlich überraschenderweise gezeigt, dass bei einem Reversieren des Mitnehmerelementes bzw. bei einer Umkehr der Transportrichtung unter anderem aufgrund sich im Betrieb abnützender bzw. verlängernder Mitnehmerelemente wie Ketten, Riemen oder dergleichen, es ohne diese vorteilhafte erfinderische Maßnahme bzw. ohne diese Anschlagvorrichtung zu Beeinträchtigungen kommen kann.

Vorzugsweise weist die Anschlagvorrichtung wenigstens eine Sperrklinke auf, wobei die Sperrklinke mit einem mehrere Ausnehmungen aufweisenden Rastelement in Wechselwirkung steht. Hiermit kann eine Verlängerung bzw. eine Abnützung des Mitnehmerelementes im Betrieb ausgeglichen und zugleich der erfindungsgemäße Anschlag weiterverwendet bzw. nachgestellt werden. Demzufolge bleibt auch die vorteilhafte Reversierbarkeit selbst bei längerem Betrieb erhalten.

In einer vorteilhaften Ausführungsform der Erfindung weist die Spanneinheit wenigstens ein Sensorelement zum Erfassen einer Verstellung und/oder Spannung des Spannelementes oder der Anschlagvorrichtung oder des Mitnehmerelementes auf. Hiermit kann in vorteilhafter Weise unter anderem das Maß der Abnützung bzw. der Verlängerung des Mitnehmerelementes im oder während des Betriebes erfasst und vorzugsweise für eine Kontroll- und/oder Anzeigeeinheit zum Anzeigen eines vorgegebenen Grenzwertes bzw. maximal zulässigen Abnützung zur Verfügung gestellt werden. So ist eine automatische Warnung bzw. Informierung einer Wartung bzw. eines Servicefalls realisierbar.

Ein Ausführungsbeispiel ist in der Zeichnung dargestellt und wird anhand der Figuren nachfolgend näher erläutert.

Im Einzelnen zeigt:
- Figur 1: schematisch eine Fließmontage - Stauförderband in Draufsicht,
- Figur 2: schematisch ein modulares Bandsystem gemäß Figur 1 in perspektivischer Darstellung, das beliebig erweiterbar ist,
- Figur 3: schematisch eine Fließmontage - Stauförderband im Ausschnitt in Draufsicht und in Seitenansicht,
- Figur 4, Figur 5 und Figur 6: verschieden stark vergrößerte, schematische Darstellungen der Einschleusung eines Transportwagens über eine Fahrrampe als hilfsmittelfreie, präzise Aufbringung von Bereitstellungswagen,
- Figur 7 und Figur 8: schematischer Querschnitt bzw. perspektivische Ansicht einer Stauförderanlage,
- Figur 9 und Figur 10: schematisch eine Integration einer Hebeeinheit bzw. Scherenhubtisch mit 360° drehbarer Transportwagenaufnahme für die Montage, Figur 11 eine schematische Schenkstation in Draufsicht mit 180° Umlenkung der Förderrichtung mittels zwei je 90° Schwenkstationen auf z.B. parallel verlaufende Förderstrecken/-bahnen,
- Figur 12: schematisch eine einzelne Schwenkstation in perspektivischer Darstellung,
- Figur 13, Figur 14 und Figur 15: schematisch in Draufsicht dargestellte Schwenkstationen in der Ecke, d.h. 90°-Umlenkung, oder in einer Kreuz- und T-Verbindung (insb. für einschleusen, ausschleusen innerhalb der Anlage),
- Figur 16: eine schematisch in Seitenansicht dargestellte Hebe-bzw. Senkstation zur Überwindung von Höhensprüngen im Fördersystem (schematisch mit zwei Etagen übereinander),
- Figur 17: schematischer Querschnitt durch das Förderband im Bereich des Antriebsmotors mit variabler Breite,
- Figur 18: schematischer Querschnitt durch das Förderband im Bereich einer Stopperstelle mit einstellbarem Dämpfer,
- Figur 19: schematische Seitenansicht mit Stopperstelle und Stoßstelle der Bandmodule mit höhenverstellbarer Aufständerung,
- Figur 20: schematische Draufsicht einer weiteren Drehstation bzw. Schenkstation,
- Figur 21: schematische Seitenansicht sowie perspektivische Ansicht einer weiteren Hebestation und/oder Indexierstation,
- Figur 22: ein schematischer Querschnitt durch eine Trägerschiene bzw. Transportprofil mit Transportband,
- Figur 23: eine schematische teilweise geschnittene Seitenansicht einer Antriebseinheit des Transportbandes,
- Figur 24: eine schematische Seitenansicht einer Spanneinheit des Transportbandes mit Sperrklinke,
- Figur 25: eine schematische teilweise geschnittene Draufsicht der Spanneinheit gemäß Figur 24,

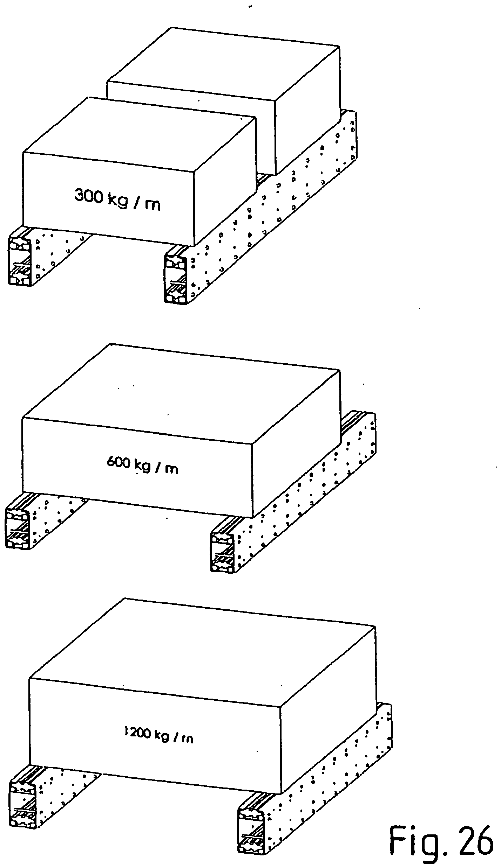

- Figur 26: eine schematische Darstellung von Transportprofilen als Stahlblechkonstruktionen für drei verschiedene Belastungs- bzw. Leistungsklassen

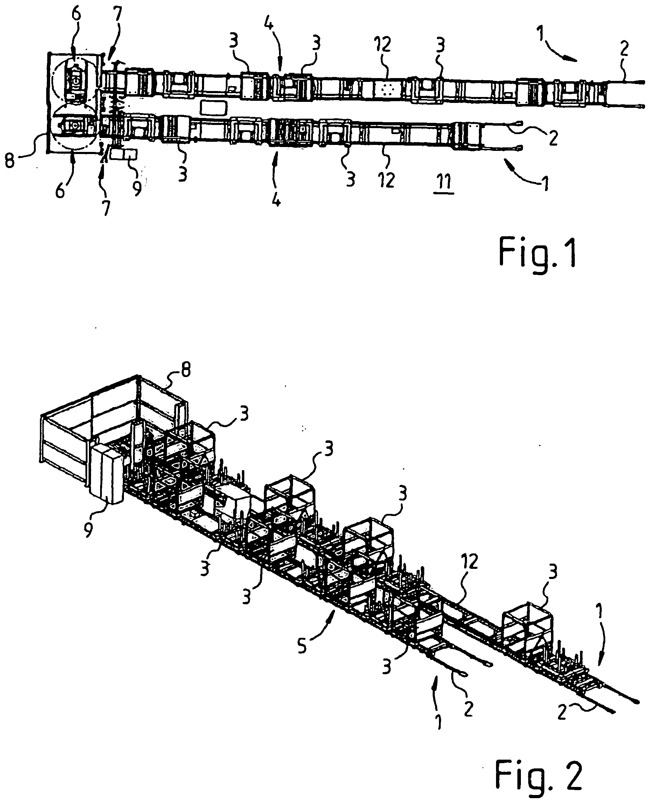

In Figur 1 ist schematisch ein Staufördersystem dargestellt, das eine Fahrrampe 1 bzw. Einschleuseinheit 1 mit Einschleusungsschienen 2 aufweist. Die Fahrrampe 1 bzw. Einschleuseinheit 1 kann bei Richtungsumkehr zudem auch als Ausschleuseinheit 1 ausgebildet werden.

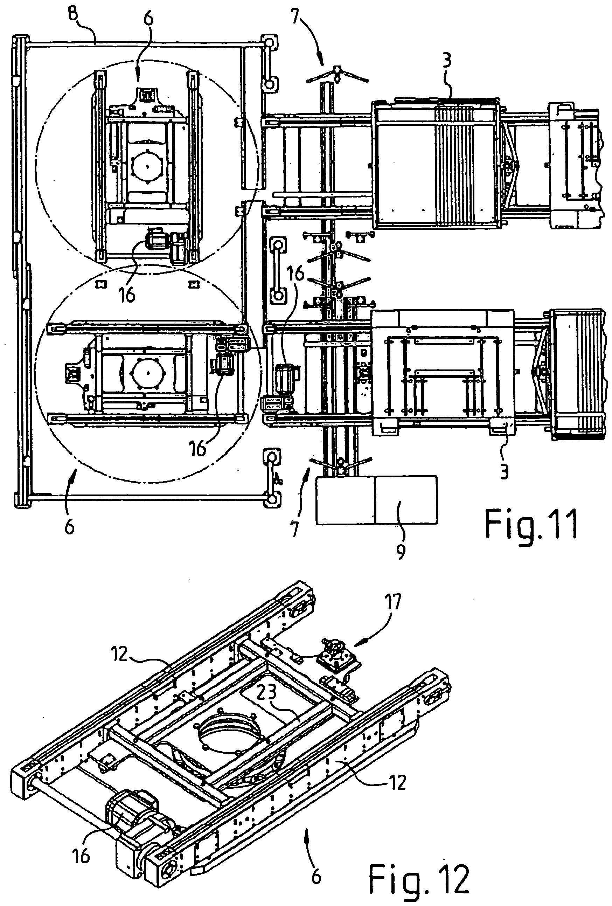

Weiterhin sind in Figur 1 Transportwägen 3, Montageplätze 4, sowie ein Pufferbereich 5 zum Puffern unterschiedlichster Arbeits-/Transportgeschwindigkeiten und/oder z.B. als Wartebereich vor einer nachfolgenden Bearbeitungs- bzw. Montageeinheit/Montageplatz 4 aufgeführt. Zudem sind Schwenkeinheiten 6 mit jeweils 90° Schwenkbereich vorgesehen, um eine Wendemöglichkeit für die Transportwägen 3 zu realisieren. Aus Sicherheitsgründen ist der Wendebereich mittels einer sicherheitsschranke 7 sowie einer Schutzwand 8 gesichert bzw. abgeriegelt, um unbefugten Zutritt zu verhindern bzw. eine Abschaltung des Systems zu ermöglichen (vgl. insb. Figur 11).

Zudem ist ein Schaltschrank 9 vorgesehen, in dem wesentliche elektronische und elektrische Steuer- bzw. Kontrollelemente untergebracht sind.

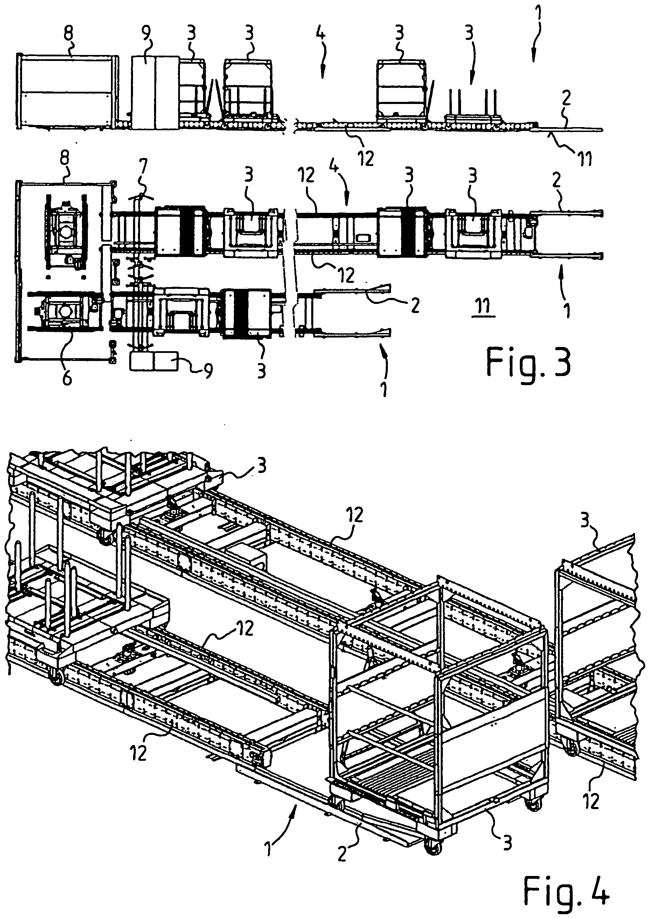

Im dargestellten Beispiel sind in vorteilhafter Weise immer zwei Transportwägen 3, miteinander gekoppelt, da auf einem das Material bzw. die zu montierenden Bauteile angeordnet sind und auf dem anderen ist die zu fertigende Vorrichtung oder Maschine, Gestell etc. angeordnet. So kann an einem Montageplatz 4 eine Person die Bauteile von dem einen Wagen 3 nehmen und auf den anderen, gekoppelten Wagen 3 die Vorrichtung bzw. das Produkt generieren. Diese Kopplung zweier Transportwägen 3 ist in Figur 3 deutlicher zu erkennen.

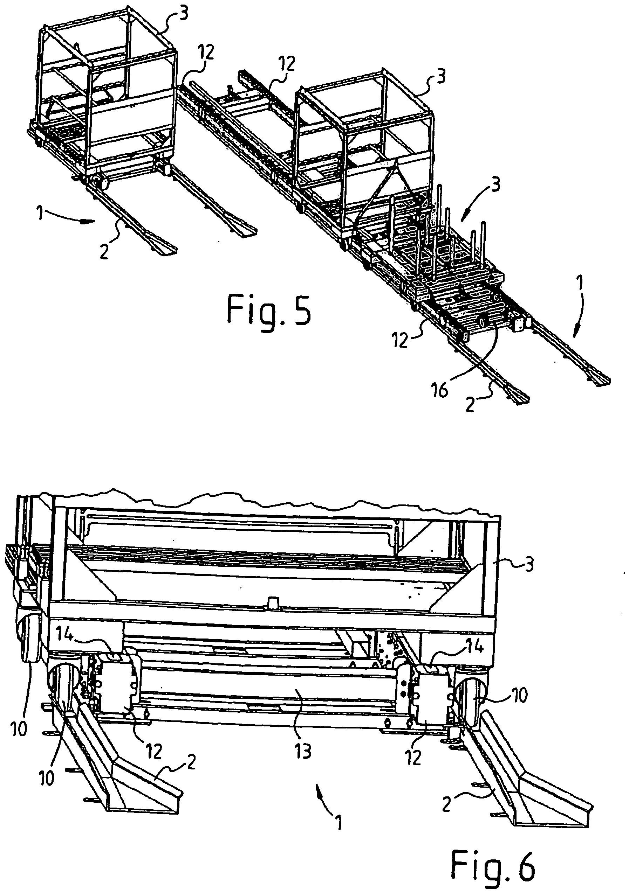

In den Figuren 4 bis 6 sind Details aufgeführt. Hier wird veranschaulicht, wie ein Transportwagen 3 ein- oder ausgeschleust bzw. auf die Fahrrampe 1 bzw. die Fahrschienen 2 auffährt und ins System eingebunden wird. Mittels Laufräder 10 fährt der Transportwagen 3 z.B. geschoben von einer Person, über die flache Rampe/Fahrschiene 2, so dass dieser angehoben wird und nach der Einschleusung bzw. vor der Ausschleusung die Laufräder 10 den Kontakt zum Flur bzw. Boden 11 verlieren. Der Flur 11 ist gemäß der Erfindung als zweite Fahrbahn 11 des Transportwagens 3 ausgebildet. D.h. auch, dass im Eingeschleusten Zustand die Laufräder 10 "in der Luft hängen".

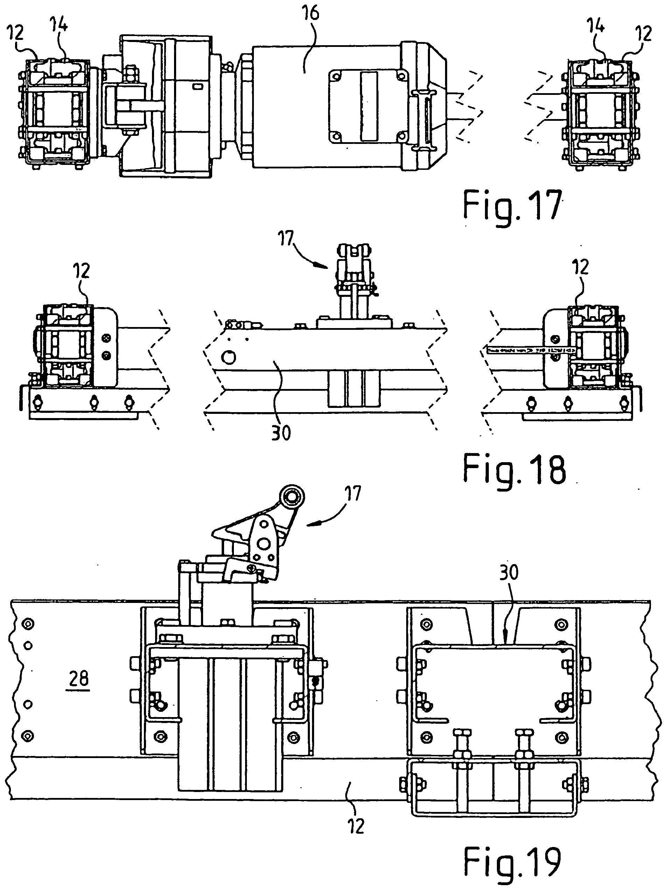

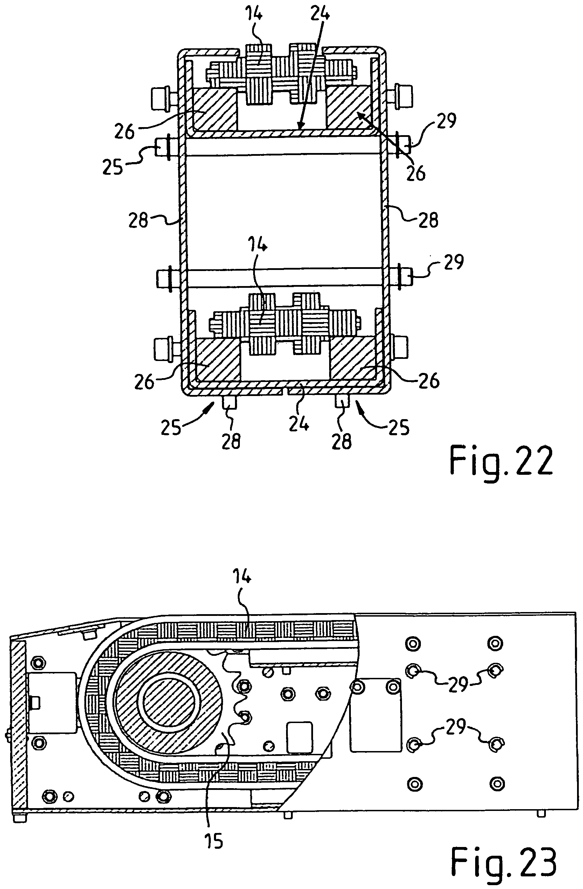

Der Transportwagen liegt nun auf Transportschienen 12 bzw. Profilen 12 auf. Die Transportschiene 12 umfasst ein endloses Transportband 14, das als erste Fahrbahn 14 im Sinn der Erfindung und z.B. als GL-Kette oder dergleichen ausgebildet ist. Dies ist in den Figuren 22 und 23 etwas detaillierter dargestellt, wobei deutlich wird, dass das Transportband 14 über ein Zahnrad 15 angetrieben wird. Dieses wird wiederum über einen Antriebsmotor 16 angetrieben. Der Antriebsmotor 16 ist vorzugsweise zwischen den Schienen 12 angeordnet (vgl. Figur 17). Ebenfalls sind in vorteilhafter Weise möglichst alle Komponenten zwischen den Schienen 12 angeordnet, so dass die Laufräder außerhalb bzw. seitlich außen an den Schienen angeordnet sind und konfliktlos sich längs der Schienen bzw. in Transportrichtung bewegen können.

Allerdings ist auch realisierbar, zumindest einzelne Komponenten außerhalb der vorzugsweise parallel zueinander ausgerichteter Schienen 12 anzuordnen. Dies kann u.a. für Wartungs- oder Reparaturarbeiten von Vorteil sein. Dementsprechend ist z.B. der Antriebsmotor 16 durchaus auch bei besonderen Anwendungen auch entsprechend außen ggf. mittels einer Kupplung oder dergleichen anordenbar, ohne dass dieser mit den Laufrädern 10 in Konflikt kommt.

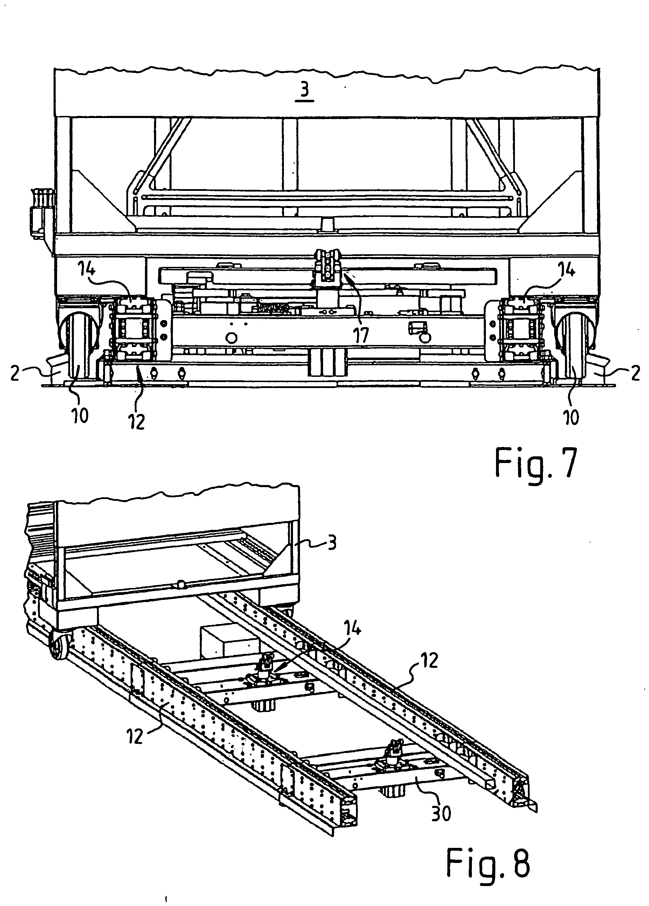

Vor allem in den Figuren 7, 8, 18 und 19 sind Stopper 17 zu erkennen, die ein automatisiertes Anhalten bzw. Stoppen, aber auch Anfahren der Transportwagen 3 steuern bzw. regeln erlauben. Hiermit kann das Ankommen des Wagens 3 erkannt werden und ggf. bei Bedarf das Transportband 14 bzw. der Motor 16 anhalten und bei einem weiteren Signal bzw. anderer Information wieder in Betrieb bzw. in Bewegung versetzen lassen. In vorteilhafter Weise ist der Stoper 17 derart ausgebildet, das dieser vom Wagen 3 überfahren werden kann.

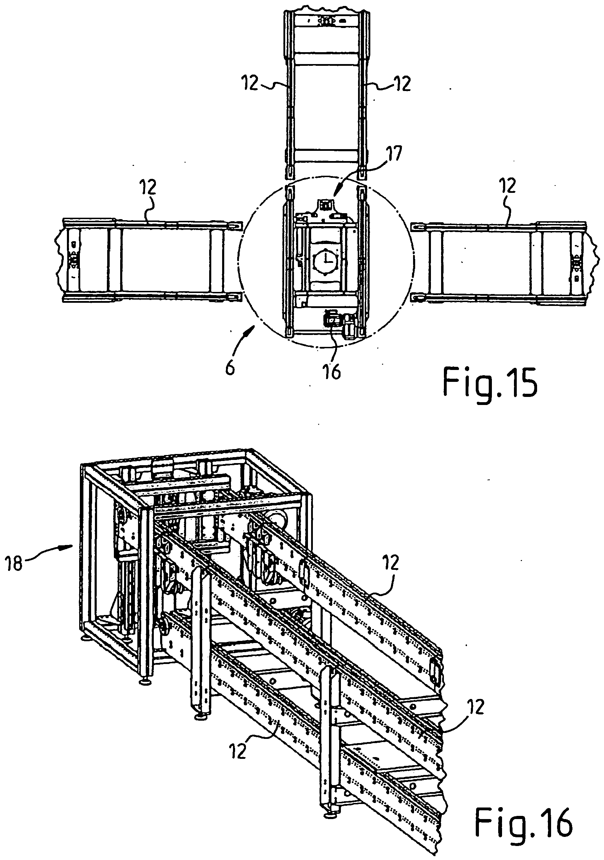

In Figur 16 ist beispielhaft und sehr schematisch eine doppelstöckige Variante der Erfindung bzw. Abschnitt dargestellt. D.h. es sind zwei Transportsysteme bzw. Transportschienen 12 übereinander angeordnet. Entsprechend ist eine Hebeeinheit 18 vorgesehen, die die Wagen 3 von einer Schiene 12 bzw. Ebene in die andere hochhebt und/oder herabsenkt.

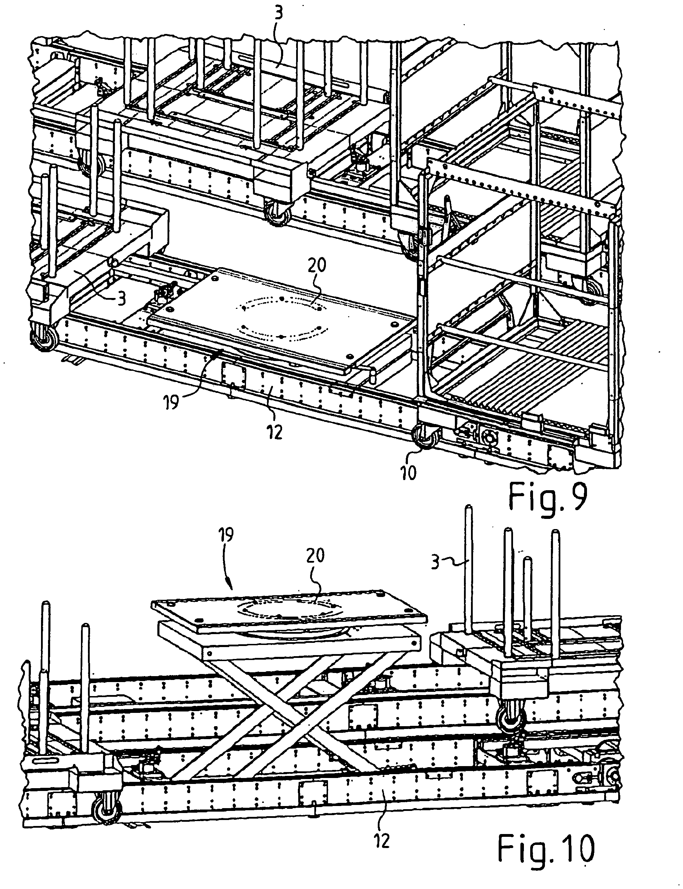

In den Figuren 9 und 10 sind zum Beispiel Hubtische 19 bzw. Drehtische 19 dargestellt. Diese ermöglichen z.B. an einem Montageplatz 4 ein Anheben des Wagens 3, so dass die Montageperson besser an entsprechende Bauteile und/oder Produkte kommen kann. Beispielsweise wird das zu fertigende Produkt je nach Montage eines Bauteils hin- und herbewegt, so dass ggf. ein Anschrauben, Schweißen, Kleben etc. schneller bzw. besser geht. Figur 10 zeigt, dass es sich vorliegend um einen Scherenhubtisch 19 mit Dreheinheit 20 handelt.

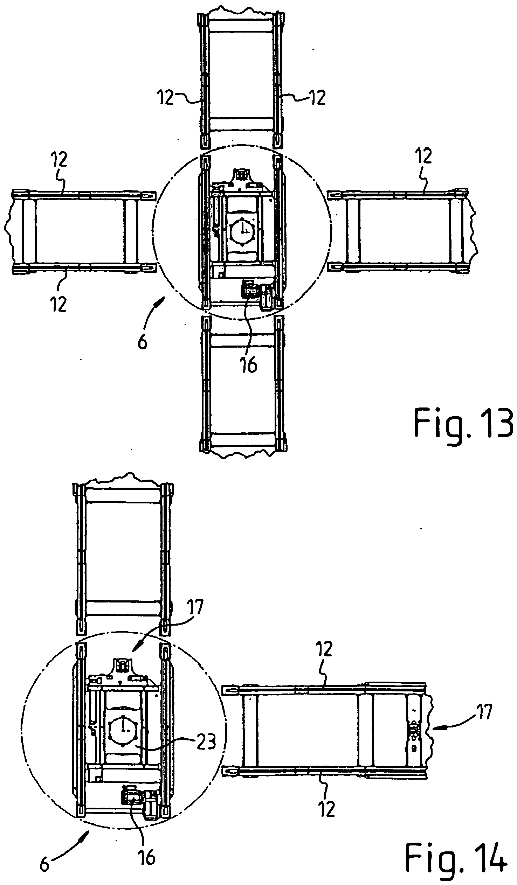

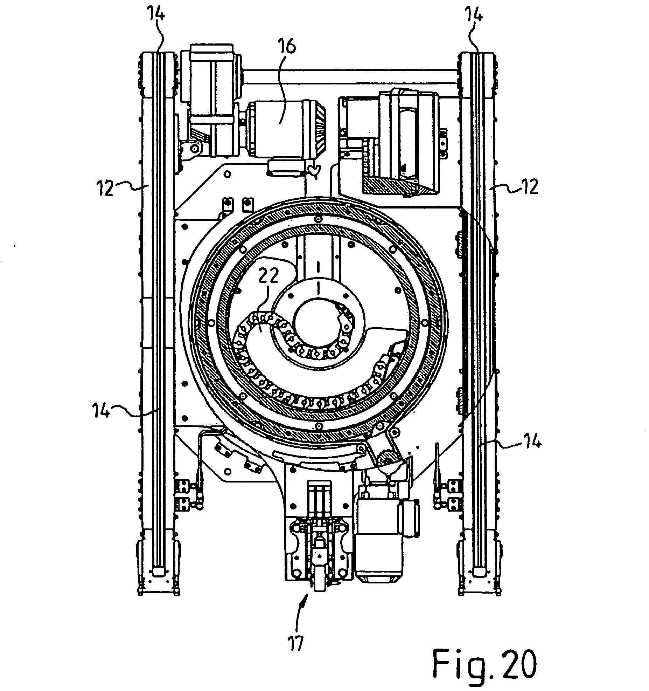

In den Figuren 11 bis 15 sowie 20 sind verschiedene Varianten von Schwenkeinheiten 6 bzw. deren Einbindung in ein Fördersystem gemäß der Erfindung veranschaulicht. Die Variante gemäß Figur 20 (teilweise geschnitten) weist eine Medienführung mittels einer sogenannten Rollen- oder Energiekette 22 auf, so dass Drehungen um z.B. 360° möglich sind. Hierbei schwenkt ein Getriebemotor oder dergleichen ein drehbares Oberteil 23 auf, so dass eine frei programmierbare Position des Transportwagens 3 realisierbar ist, z.B. um eine Änderung der Transportrichtung von 90° zu realisieren (vgl. z.B. Figur 14).

Vorzugsweise weisen die Komponenten bzw. Einheiten des Fördersystems ein Datenbus und/oder ein zentrales oder dezentrales Schmiersystem auf, so dass die einzelnen Module bzw. Einheiten frei bzw. flexibel miteinander kombiniert und betrieben werden können.

Der Aufbau mittels Blechelementen wird u.a. in den Figuren 8, 19, 22 und 25 ersichtlich. Hierbei ist eine Transportschiene 12 vor allem durch zwei seitliche C-Profil-Bleche 28, die insb. die Statik gegen Durchbiegung generieren, und ein bzw. zwei liegende C-Profil-Bleche 24, die jeweils auf einer vorteilhafte Auflage 25 angeordnet sind, sowie Auflageleisten 26 vorgesehen. Die C-Profil-Bleche 24 tragen die Auflagerlasten über einen Formschluss bzw. über die Auflagen 25 bzw. Stifte 25 ab. Vorteilhafte Spannstifte sind zur Fixierung der Schienen 12 auf nicht näher dargestellten Fußelementen vorgesehen. Stifte 29 sind in vorteilhafter Weise in einem vorgegebenen Raster angeordnet, so dass die Modularität des Systems sich auch bzg1. der Herstellung verschieden langer und/oder ausgebildeter Einheiten wiederfindet. Hierdurch wird eine standardisierte Herstellung entsprechender Komponenten für das Fördersystem gemäß der Erfindung wirtschaftlich günstig realisierbar. Dies trifft im Wesentlichen auch auf zwischen den Schienen 12 angeordneten Querträger 30 zu.

Die Tragfähigkeit des Systems bzw. der Tragschienen 12 hängt v.a. auch von der Bandlänge bzw. der Länge des Förderbandes 14 bzw. der Kette 14 ab, die diese hier im Allgemeinen der sog. "limitierenden Faktor" darstellt. Die nachfolgend aufgeführten beispielhaften Angaben eines Ausführungsbeispiels sind daher auf eine Förderband- bzw. der Kettenlänge von 10m angegeben. Diese Tragfähigkeit kann in vorteilhafter Weise durch eine Verkürzung bzw. Reduzierung der Bandlänge erhöht und durch eine Verlängerung der Bandlänge reduziert werden.

Beispielsweise kann es zur Erhöhung der Tragfähigkeit des Systems von Vorteil sein, kürzere Module und/oder kürzere Förderbänder 14 bzw. Ketten 14 zu verwenden, um ggf. eine größere Länge des Systems zu verwirklichen. Das heißt, dass beispielsweise an Stelle eines einzigen, z.B. 12m langen Förderbandes 14 bzw. der Kette 14 zur Erhöhung der Tragfähigkeit in vorteilhafter Weise zwei endlos umlaufende Förderbänder 14 bzw. Ketten 14 benachbart und in Transportrichtung hintereinander angrenzend angeordnet werden können. Dies kann einerseits mittels entsprechend separater, aneinandergrenzender Transportschienen 12 bzw. Module und/oder über eine gemeinsame Transportschiene 12 bzw. Modul, jedoch mit zwei oder mehreren, in Längsrichtung hintereinander angeordneten Förderbändern 14 bzw. Ketten 14 realisiert werden.

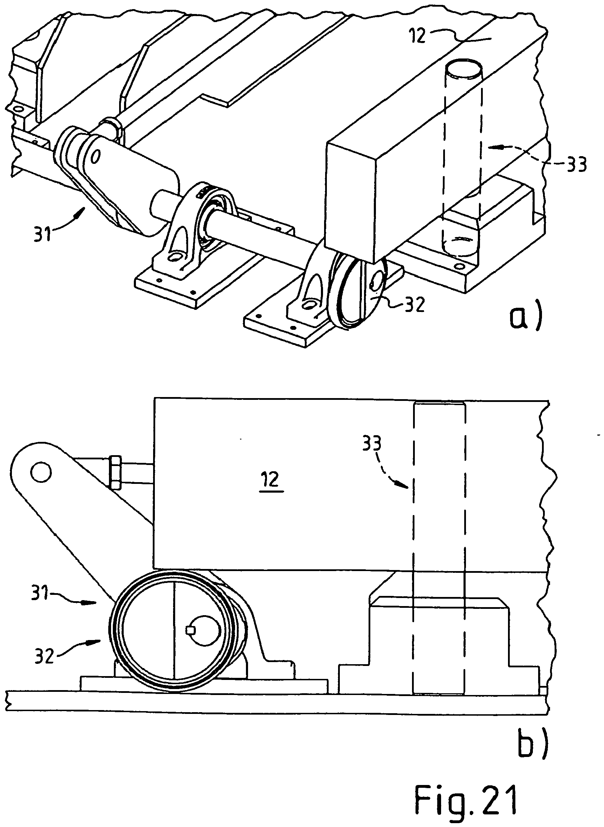

In Figur 21 ist eine Hebe- bzw. Indexiereinheit 31 dargestellt. Diese hebt die Schienen 12 derart nach oben an, dass beispielsweise zum Indexieren, d.h. exakten Positionieren der Wagen 3, und/oder zum Stabilisieren bei schweren, stoßartigen Bearbeitungen wie Hämmern oder dergleichen auf den Wagen 3. Bei der dargestellten Variante ist ein Excentermechanismus 32 zum Anheben bzw. Senken vorgesehen und eine Führung 33.

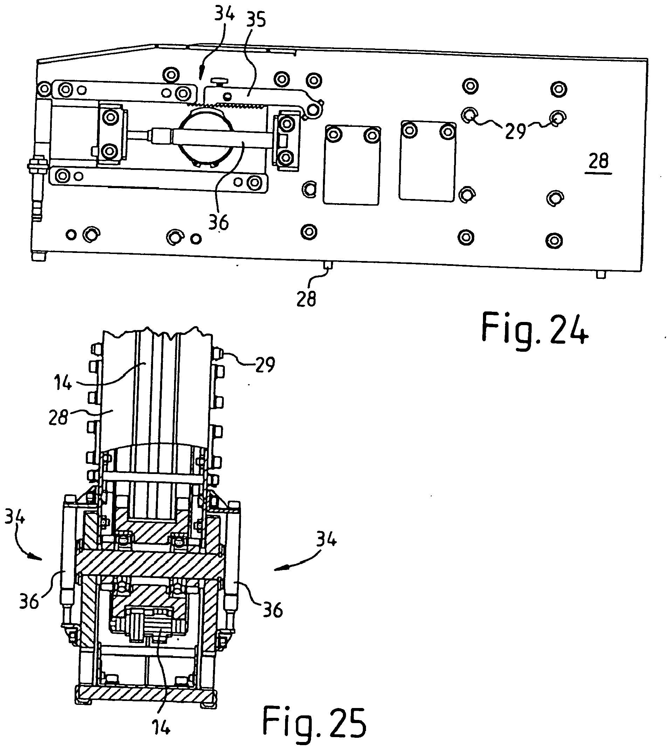

Die Figuren 24 und 25 zeigen eine Spanneinheit 34 mit Rückstellsicherung bzw. Anschlag 35. So ist ein Spannen des Förderbandes 14 bzw. der Kette 14 mittels z.B. zweier Federelementen 36 und/oder pneumatischen Hubzylindern oder dergleichen vorgesehen. Diese sind in vorteilhafter Weise derart ausgebildet, dass sie in der Lage sind die Kette 14 oder dergleichen so stark und so lange zu spannen, bis diese die maximale Längung erreicht hat, bei der diese ausgewechselt werden sollte. Hierbei kann ein vorteilhafter Sensor oder dergleichen eingesetzt werden, um die maximale Längung zu ermitteln und eine entspr. Signalisierung bzw. Warnung/Information zu generieren.

Eine vorteilhafte Sperrklinke 35 bzw. Rückanschlag 35 ist dafür vorgesehen, dass auch ein vorteilhafter Reversierbetrieb bzw. eine Umkehrung der Förderrichtung möglich wird. Es hat sich gezeigt, dass bei einer Umkehrung der Förderrichtung ansonsten es zu Beeinträchtigungen mit dem Förderband 14 bzw. der Kette 14 kommen kann. Mittels des Anschlags 35 ist dies wirkungsvoll verhindert. Somit kann eine Nachjustage der Position des Wagens 3 längs des Förderbandes bzw. der Transportschienen 12 z.B. durch die Montageperson am Montageplatz 4 je nach belieben der Person oder für jeden Arbeitsschritt ermöglicht werden.

Nachfolgend sind exemplarische Ausführungs- und Anwendungsbeispiele (Auswahl) bzw. technische Daten eines erfindungsgemäßen Fördersystems aufgeführt:
● getaktete Fliesmontage
● Verkettung von Montagearbeitsplätzen
● Logistik im Bereich Materialfluss (Zu- und Abtransport)
● Verkettung von Werkzeugmaschinen
● Werkstückpalettierung (Transport von Werkstückpaletten)
● Getriebe- und Motorenfertigung
● Herstellung von Montagebaugruppen
● Gehäusefertigung
● Herstellung von weiser Ware (Kühlschränke, Waschmaschinen usw.)

### Branchen

● Maschinen und Anlagenbau
● Fahrzeugbau, Automobilindustrie, Flugzeugindustrie
● Gerätebau
● Konsumgüterindustrie
● Zulieferer und Lohnfertiger
● Elektrotechnik
● Energietechnik

### Besonderheiten:

● Schwerlastbereich 300-1200 kg/m (bezogen auf 10m Bandlänge
● Transport von fahrbaren Werkstückträgern
● Einfache manuelle (hilfsmittelfreie) Aufbringung und Entnehmung auf das bzw. vom Band bzw. de Stauförderanlage, d.h. von Hand
● Hohe Biegesteifigkeit durch robuste Stahlkonstruktion
● Flexibles Baukastensystem, beliebig erweiterbar
● Positionieren und Vereinzeln der Werkstückträger auf einem gemeinsamen Förderband
● Ebenerdig oder mit Aufständerung lieferbar
● Begehbar
● Keine baulichen Vorbereitungen für Installation erforderlich
● Begehbare Flächen sind möglich

### Funktionsmerkmale, u.a.:

● Heben, Senken, Drehen, Positionieren, Puffern, Wenden, Einschleusen und Ausschleusen

### Beispielhafte technische Daten:

| | |
|---|---|
| ● Fördergeschwindigkeit | 6-12 m/min (FU geregelt) |
| ● Lastbereiche | 0-300, 0-600, 0-1200 kg/m |
| ● Bauhöhe | 225 mm bis beliebig |
| ● Baubreite | ab ca. 600mm bis ca. 1m |
| | (abhängig vom Lastbereich, d.h. Last plus Wagen) |
| ● Baulänge des Baukastens | 1960 mm ohne Zwischenstütze |
| ● Abstand der Quertraversen | 1960 mm |
| ● Jede Länge ist realisierbar durch Modulbauweise, z.B. ca. 10 m, 50 m, 100 m etc. | |
| ● Breite ist beliebig ausführbar | |
| ● Grundfläche de Wagen 1320 x 1400 mm oder Standardmaße z.B. Euro-Paletten-Maße etc. | |

### Steuerung:

● Standschrank (Rittal) ggf. mit Visualisierung und/oder Bedienpulte oder dergleichen
● SPS Siemens 700-300 oder andere
● Visualisierung
● Profi BUS Anbindung
● Sensorik

### Sicherheitsstandard:

● Ausführung gemäß VDE
● Ausführung gemäß UVV
● CE Konformität
● Sicherung des Gefahrenbereiches bzw. der Schwenkstationen mittels
● Eintrittsüberwachung über Mehrstrahl - Sicherheitslichtschranke und z.B. mehreren Mutingsensoren, ggf. induktiv, kapazitiv, etc.
● Schwenkeinheit mit (pneumatischer) Notausschaltung
● Austrittsüberwachung über Mehrstrahl -

### Sicherheitslichtschrianke und ggf. Mutingsensoren Antriebsleistung, z.B.:

| | |
|---|---|
| ● Antrieb für Bänder | 2,2 kW |
| ● Antrieb für die Umlenkung | 1,1 kW |

### Ausstattung:

● Einstellbare Stopper, ggf. mit einstellbarem Stoßdämpfer
● Umhausung nach Bedarf
● Wendestation 90° und 180°
● Scherenhubtische
● Werkstückträger
● Werkstückträgerwagen
● Automatische Kettenschmierung
● Begehbare Trittflächen zwischen den Bändern
● Höhenverstellbarer Unterbau
● Identsystem (Optional)
● Bedienpulte
● Steuerung mit Profi BUS

Grundsätzlich kann ein innerbetrieblicher Transport für das gesamte Betriebsgelände, d.h. freier Flur etc., und Stauförderanlage realisiert werden, wobei Einzelteile und fertig montierte Einheiten zum/vom Stauförderband und z.B. im Außenbereich etc. auf ein und demselben Wagen transportiert bzw. bearbeitet/montiert werden können.

## Patentansprüche

1. Staufördersystem, insbesondere Montagefördersystem, mit einer zumindest eine erste Fahrbahn aufweisende Stauförderanlage und wenigstens einem Transportwagen, insbesondere Werkstückwagen, wobei die Stauförderanlage wenigstens eine Antriebsvorrichtung zum Antreiben des Transportwagens auf der ersten Fahrbahn aufweist, wobei die Antriebsvorrichtung wenigstens ein endlos umlaufendes Mitnehmerelement, insbesondere eine Kette, ein Band oder dergleichen, mit mindestens einer Antriebsfläche zum Anordnen an eine Mitnahmefläche des Transportwagens umfasst, **dadurch gekennzeichnet, dass** der Transportwagen als Flurförderwagen ausgebildet ist, wobei der Flurförderwagen wenigstens zwei, mit einem quer zur Förderrichtung ausgerichteten Abstand voneinander beabstandete Laufräder zum Fahren auf dem als zweite Fahrbahn ausgebildeten Flur umfasst, wobei die Laufräder zumindest eine von der Mitnahmefläche separate Lauffläche umfassen.

2. Staufördersystem nach Anspruch 1, **dadurch gekennzeichnet, dass** die Stauförderanlage wenigstens eine Einschleuseinheit und/oder eine Ausschleuseinheit zum Ein- und/oder Ausschleusen des Flurförderwagens umfasst, wobei die Einschleuseinheit und/oder Ausschleuseinheit zumindest eine zur Ebene geneigte Fahrrampe aufweist.

3. Staufördersystem nach einem der vorgenannten Ansprüche, **dadurch gekennzeichnet, dass** die Neigung der Fahrrampe kleiner als 10° ist.

4. Staufördersystem nach einem der vorgenannten Ansprüche, **dadurch gekennzeichnet, dass** die Neigung der Fahrrampe kleiner als 1° ist.

5. Staufördersystem nach einem der vorgenannten Ansprüche, **dadurch gekennzeichnet, dass** die Fahrrampe wenigstens zwei, im Abstand der Laufräder voneinander beabstandete Fahrschienen aufweist.

6. Staufördersystem nach einem der vorgenannten Ansprüche, **dadurch gekennzeichnet, dass** die Einschleuseinheit und/oder Ausschleuseinheit und/oder die Fahrschienen am zum Flur ausgerichteten Ende wenigstens eine sich verjüngende Führungseinheit zum Ein-/Ausführen der Laufräder aufweist.

7. Staufördersystem nach einem der vorgenannten Ansprüche, **dadurch gekennzeichnet, dass** die Laufräder des Transportwagens außen seitlich neben der Stauförderanlage und/oder der ersten Fahrbahn angeordnet sind.

8. Staufördersystem nach einem der vorgenannten Ansprüche, **dadurch gekennzeichnet, dass** das endlos umlaufende Mitnehmerelement der Stauförderanlage zwischen den Laufrädern des Transportwagens angeordnet ist.

9. Staufördersystem nach einem der vorgenannten Ansprüche, **dadurch gekennzeichnet, dass** ein Antriebsmotor der Antriebsvorrichtung zwischen den Laufrädern des Transportwagens angeordnet ist.

10. Staufördersystem nach einem der vorgenannten Ansprüche, **dadurch gekennzeichnet, dass** das Staufördersystem als Modulbausystem ausgebildet ist.

11. Staufördersystem nach einem der vorgenannten Ansprüche oder nach dem Oberbegriff des Anspruchs 1, **dadurch gekennzeichnet, dass** die Stauförderanlage wenigstens eine Transportschiene zum Tragen und Führen des Transportwagens aufweist, wobei die Transportschiene im Wesentlichen aus gebogenen und miteinander verbundenen Blechelementen aufgebaut ist.

12. Staufördersystem nach einem der vorgenannten Ansprüche oder nach dem Oberbegriff des Anspruchs 1, **dadurch gekennzeichnet, dass** eine wenigstens ein Spannelement aufweisende Spanneinheit zum Spannen des Mitnehmerelementes in eine Spannrichtung vorgesehen ist, wobei die Spanneinheit wenigstens eine Anschlagvorrichtung zum Sperren des Verstellens und/oder Anschlagen des Spannelementes entgegen der Spannrichtung aufweist.

13. Staufördersystem nach einem der vorgenannten Ansprüche, **dadurch gekennzeichnet, dass** die Anschlagvorrichtung wenigstens eine Sperrklinke aufweist, wobei die Sperrklinke mit einem mehrere Ausnehmungen aufweisenden Rastelement in Wechselwirkung steht.

14. Staufördersystem nach einem der vorgenannten Ansprüche, **dadurch gekennzeichnet, dass** die Spanneinheit wenigstens ein Sensorelement zum Erfassen einer Verstellung und/oder Spannung des Spannelementes oder der Anschlagvorrichtung oder des Mitnehmerelementes aufweist.
